# EUROPÄISCHE PATENTSCHRIFT

(11) **EP 2 174 179 B1**
(45) Veröffentlichungstag und Bekanntmachung des Hinweises auf die Patenterteilung: **28.01.2015**
(21) Anmeldenummer: 08802592.9
(22) Anmeldetag: 25.09.2008
(51) Int. Cl.: G02C 5/22

(54) **SCHARNIER FÜR BRILLEN**
HINGE FOR SPECTACLES
CHARNIÈRE DE LUNETTES

(30) Priorität: 27.09.2007 DE 102007048011
(43) Veröffentlichungstag der Anmeldung: 14.04.2010
(73) Patentinhaber: OBE Ohnmacht & BaumgÀ¤rtner GmbH & Co. KG, 75228 Ispringen (DE)
(72) Erfinder: WANNENMACHER, Ulrich, 76689 Karlsdorf (DE)
(74) Vertreter: Gleiss, Alf-Olav
(86) Internationale Anmeldenummer: PCT/EP2008/008119
(87) Internationale Veröffentlichungsnummer: WO 2009/043532

(56) Entgegenhaltungen:
- DE-A1- 2 026 331
- DE-B- 1 117 911
- DE-B- 1 175 011
- DE-C- 894 918
- US-A- 2 987 757
- US-A- 3 104 416
- US-A- 4 145 124
- US-A- 4 256 388

## Beschreibung

Die Erfindung betrifft ein Scharnier für Brillen gemäß Oberbegriff des Anspruchs 1.

Scharniere für Brillen sind bekannt (DE 11 17 911 B). Sie dienen dazu, das Mittelteil einer Brille mit Bügeln zu verbinden. Dabei ist jeweils ein erstes Scharnierteil einem Mittelteil der Brille zugeordnet und ein zweites Scharnierteil einem Bügel. Beispielsweise weist eines der Scharnierteile drei und das andere zwei sogenannte Lappen auf, also Vorsprünge, die in einem Abstand zueinander angeordnet sind. Dabei greifen zwei in einem Abstand angeordnete Lappen in die Lücken zwischen drei Lappen des anderen Scharnierteils ein. Die Verbindung der beiden Scharnierteile erfolgt in der Regel durch eine Schraube, die Durchgangslöcher in den Lappen durchgreift. Die Schraube dient als Schwenkachse für die beiden Scharnierteile, sodass die Bügel gegenüber dem Mittelteil der Brille schwenkbeweglich gelagert sind. Dabei sind an dem Scharnierteil, das drei Lappen aufweist, zwei benachbarte Lappen vorgesehen, von denen nur einer ein Durchgangsloch mit einem Innengewinde aufweist, und der andere mit einem Durchgangsloch versehen ist, dessen Innendurchmesser so gewählt ist, dass es mit dem Außengewinde der Schraube nicht zusammenwirkt. Die Verbindung zwischen den Bügeln und dem Mittelteil erfolgt vorzugsweise durch Schnappeffekt-Federscharniere, bei denen ein erstes Scharnierteil am Mittelteil der Brille und das zweite Scharnierteil an einem Bügel angebracht ist. Eines der Scharnierteile, in der Regel das am Bügel, ist speziell ausgebildet, um eine Federkraft auf den Bügel ausüben zu können. Diese dient dazu, den Tragekomfort der Brille zu verbessern. Außerdem sind die Scharnierteile so ausgebildet, dass die Bügel vorbestimmte Stellungen gegenüber dem Mittelteil der Brille bevorzugt einnehmen. Federscharniere der hier angesprochenen Art sind bekannt, sodass diese nicht weiter erläutert werden. Es hat sich herausgestellt, dass Scharniere mit Scharnierteilen der hier angesprochenen Art relativ stabil sind, weil die zwei Lappen des einen Scharnierteils sicher zwischen den drei Lappen des anderen Scharnierteils geführt werden. Entscheidend ist, dass zwischen den Scharnierteilen ein geringes Spiel gegeben ist. Insbesondere ist für die Anwendung bei Schnappeffekt-Federscharnieren, eine minimale Reibung zwischen den beiden Scharnierteilen besonders vorteilhaft. Bei der Montage des Scharniers wird die Schraube durch die Durchgangslöcher in den Lappen der Scharnierteile gesteckt und festgezogen. Dabei wirkt ein Außengewinde der Schraube mit einem Innengewinde an einem der Lappen der Scharnierteile zusammen, während der Kopf der Schraube mit einer dem Scharnier zugewandten Seite auf einen der Lappen des Scharniers drückt. Beim Festziehen der Schraube wirken in Richtung der Mittelachse der Schraube gerichtete Kräfte auf die Lappen des Scharniers, sodass diese zusammengedrückt werden. Um zu verhindern, dass die Schraube insbesondere bei mehrfachem Verschwenken der Bügel gegenüber dem Mittelteil an der Brille gelöst wird, muss sie mit einem vorbestimmten Drehmoment festgezogen werden. Es ist in der Regel nicht leicht, dabei eine zu starke Zusammenpressung der Lappen der Scharnierteile zu verhindern, um die Reibung der Scharnierteile auf ein gewünschtes Minimum zu beschränken. Wird jedoch die Schraube nicht fest genug gezogen, kann sie bei mehrfacher Verwendung der Brille verloren gehen und sich der Bügel vom Mittelteil der Brille lösen. Dabei kann diese herunterfallen und zumindest beschädigt werden.

Aufgabe der Erfindung ist es daher, ein Scharnier für Brillen zu schaffen, das einerseits ein minimales Gesamtspiel und andererseits eine sehr geringe Reibung zwischen den Scharnierteilen gewährleistet.

Zur Lösung dieser Aufgabe wird ein Scharnier der oben genannten Art vorgeschlagen, das die Merkmale des Anspruchs 1 umfasst. Es weist zwei Scharnierteile auf, von denen ein erstes einem Mittelteil und ein zweites einem Bügel einer Brille zugeordnet ist, um eine schwenkbewegliche Verbindung zwischen dem Bügel und dem Mittelteil zu gewährleisten. Eines der Scharnierteile ist mit drei Lappen versehen, die in einem Abstand zueinander angeordnet sind. In den dadurch entstehenden Lücken werden zwei Lappen des anderen Scharnierteils angeordnet. Eine durch Durchgangslöcher in den Lappen greifende Schraube verbindet die Scharnierteile schwenkbeweglich. Sie ist mit einem Außengewinde und mit einem Kopf versehen, um eine sichere Verbindung der Scharnierteile gewährleisten zu können. Es sind - im zusammengebauten Zustand des Scharniers - an dem Scharnierteil, das drei Lappen aufweist, zwei benachbarte Lappen vorgesehen, von denen nur einer ein Durchgangsloch mit einem Innengewinde aufweist, während der andere mit einem Durchgangsloch versehen ist, dessen Innendurchmesser so groß ist, dass es mit dem Außengewinde der Schraube nicht zusammenwirkt. Es ist allerdings vorgesehen, dass die Innenfläche des Durchgangslochs die Schraube vorzugsweise führt. Das Scharnier zeichnet sich dadurch aus, dass bei dem Scharnierteil mit drei Lappen vorgesehen ist, dass die Durchgangslöcher von wenigstens zwei Lappen der drei Lappen des einen Scharnierteils mit Innengewinden versehen sind, die mit dem Außengewinde der Schraube zusammenwirken. Diese müssen sich nicht über die gesamte Dicke der jeweiligen Lappen erstrecken. Das Innengewinde wirkt mit dem Außengewinde der Schraube zusammen. Wird die Schraube in die Durchgangslöcher eingeführt und mit dem Innengewinde der beiden Lappen in Eingriff gebracht, so ist sichergestellt, dass auch beim Festziehen der Schraube der Abstand zwischen den beiden Lappen mit dem Innengewinde unverändert bleibt. Bei einem Scharnierteil mit drei Lappen sind also zwei benachbarte Lappen mit einem Innengewinde versehen, also ein äußerer Lappen und der innere Lappen. Auf der anderen Seite des inneren Lappens ist dann der Lappen vorgesehen, dessen Durchgangsloch kein Innengewinde aufweist und damit nicht mit dem Außengewinde der Schraube zusammenwirkt. Greift also die Schraube durch die Durchgangslöcher der Lappen und wird diese festgezogen, so wird der Lappen, der mit dem Außengewinde der Schraube nicht zusammenwirkt, gegen den inneren Lappen herangezogen. Dabei wird also der Abstand zwischen dem inneren und diesem äußeren Lappen reduziert, sodass der Lappen des anderen Scharnierteils hier definiert mit Reibungskräften beaufschlagt wird. Durch die Verformung des Lappens werden Rückstellkräfte aufgebaut, die Reibungskräfte zwischen dem Lappen und dem Schraubenkopf erzeugen und ein ungewolltes Lösen verhindern. Durch die Anpressung des äußeren Lappens eines Scharnierteils gegen den Lappen des anderen Scharnierteils ergibt sich einerseits eine erhöhte Stabilität. Andererseits wird eine definierte Reibungskraft aufgebaut. Dadurch, dass der Abstand der beiden mit einem Innengewinde versehenen Lappen auch beim Festziehen der Schraube gleich bleibt, werden hier keine zusätzlichen Reibungskräfte erzeugt. Das Spiel zwischen den beiden mit einem Innengewinde versehenen Lappen wird so eingestellt, dass hier ein minimales Gesamtspiel des Scharniers ergibt.

Ein bevorzugtes Ausführungsbeispiel des Scharniers zeichnet sich dadurch aus, dass der Abstand der beiden Lappen des einen Scharnierteils, von denen nur einer ein Innengewinde aufweist, größer ist als die Dicke des Lappens des anderen Scharnierteils, der zwischen den beiden Lappen anordenbar ist. Beim Zusammenfügen der Scharniertelle ergeben sich also hier keine Fügeprobleme. Beim Festziehen der Schrauben reduziert sich der Abstand, sodass, wie oben beschrieben, eine Verformung eines Lappens realisiert wird.

Ein besonders bevorzugtes Ausführungsbeispiel des Scharniers zeichnet sich dadurch aus, dass das Durchgangsloch in dem Lappen ohne Innengewinde des mindestens drei Lappen aufweisenden Scharnierteils zumindest bereichsweise konisch ausgebildet ist, wobei zumindest ein Bereich des Kopfes der Schraube ebenfalls konisch ist. Die Konuswinkel sind so aufeinander abgestimmt, dass der Außenkonus des Schraubenkopfs in den Innenkonus am Durchgangsloch eingreift und Reibungskräfte aufgebaut werden können, die ein Lösen der Schraube auch bei Verschwenkung der Bügel gegenüber dem Mittelteil der Brille sicher verhindern.

Besonders bevorzugt wird noch ein Ausführungsbeispiel des Scharniers, das sich dadurch auszeichnet, dass die Schraube mit einem Kunststoffelement versehen ist, das mit dem konischen Durchgangsloch zusammenwirkt. Durch die Wahl des Kunststoffs können die der Sicherung der Schraube dienenden Reibungskräfte in einem weiten Bereich eingestellt werden.

Weitere Ausgestaltungen ergeben sich aus den Unteransprüchen.

Die Erfindung wird im Folgenden anhand der Zeichnung näher erläutert. Es zeigen:
- Figur 1: ein erstes Ausführungsbeispiel eines Scharniers in Seitenansicht;
- Figur 2: einen Schnitt entlang der in Figur 1 dargstellten Linie II-II durch das Scharnier gemäß Figur 1 zusammen mit einer Schraube in Explosionsdarstellung;
- Figur 3: das Scharnier gemäß Figur 2 mit festgezogener Schraube;
- Figur 4: ein zweites Ausführungsbeispiel eines Scharniers in Seitenansicht;
- Figur 5: einen Schnitt entlang der in Figur 4 wiedergegebenen Linie V-V, und
- Figur 6: ein drittes Ausführungsbeispiel eines Scharniers mit festgezogner Schraube.

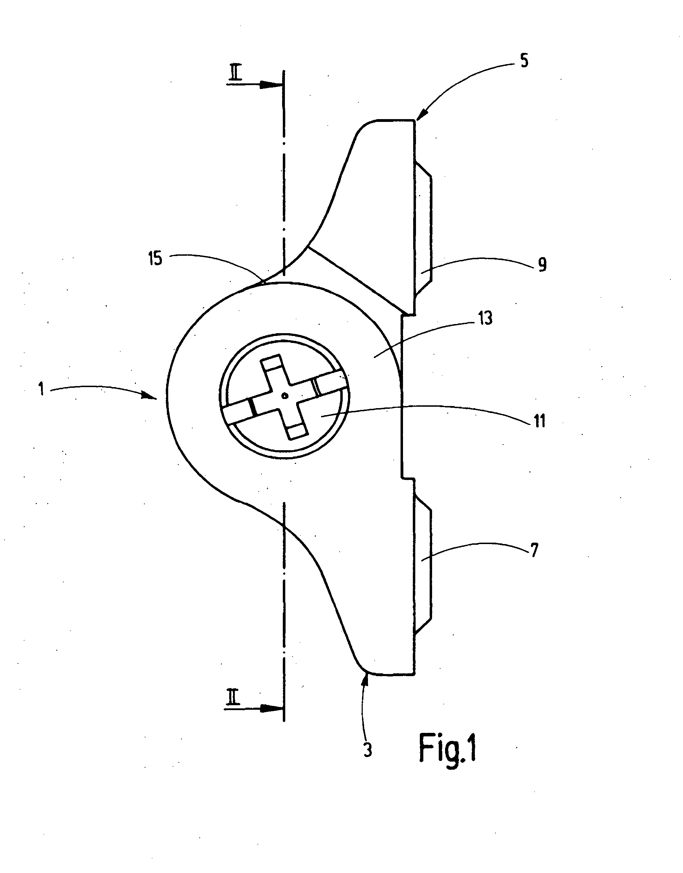

Das in Figur 1 in Seitenansicht dargestellte Scharnier 1 dient dazu, ein hier nicht dargestelltes Mittelteil einer Brille mit einem Bügel so zu verbinden, dass dieser schwenkbeweglich gegenüber dem Mittelteil gehalten wird. Das Scharnier 1 weist ein erstes Scharnierteil 3 und ein zweites Scharnierteil 5 auf, wobei das erste Scharnierteil 3 einem Bügel und das zweite Scharnierteil 5 dem Mittelteil der Brille zugeordnet sein kann. Beide Scharnierteile 3 und 5 sind hier beispielhaft mit Schweißwarzen 7, 9 versehen, die insbesondere dazu dienen, die Scharnierteile 3, 5 mit dem Mittelteil beziehungsweise Bügel einer Brille im Wege des Elektroschweißens zu verbinden. Es ist aber auch möglich, die Scharnierteile 3, 5 auf andere Weise mit Mittelteilen oder Bügeln zu verbinden und auf Schweißwarzen zu verzichten.

Die Scharnierteile 3 und 5 sind mit als Lappen bezeichneten Vorsprüngen versehen, die durch ein senkrecht zur Bildebene von Figur 1 verlaufendes Verbindungselement, beispielsweise durch eine Schraube 11, schwenkbeweglich miteinander verbunden sind. Beispielsweise ist das erste Scharnierteil 3 mit drei in einem Abstand parallel zueinander angeordneten Lappen versehen, von denen hier ein erster Lappen 13 ersichtlich ist. In den Zwischenräumen zwischen den Lappen des ersten Scharnierteils sind Lappen des zweiten Scharnierteils angeordnet, sodass die Lappen der beiden Scharnierteile ineinander greifen. Hier ist ein erster Lappen 15 des zweiten Scharnierteils 5 zu sehen. In der Regel weist das erste Scharnierteil n-Lappen auf, während das zweite Scharnierteil n-1 Lappen umfasst, die in den Zwischenräumen zwischen den Lappen des ersten Scharnierteils angeordnet sind. Im Folgenden wird davon ausgegangen, dass das Scharnier 1 ein erstes Scharnierteil 3 mit drei Lappen und ein zweites Scharnierteil 5 mit zwei Lappen umfasst.

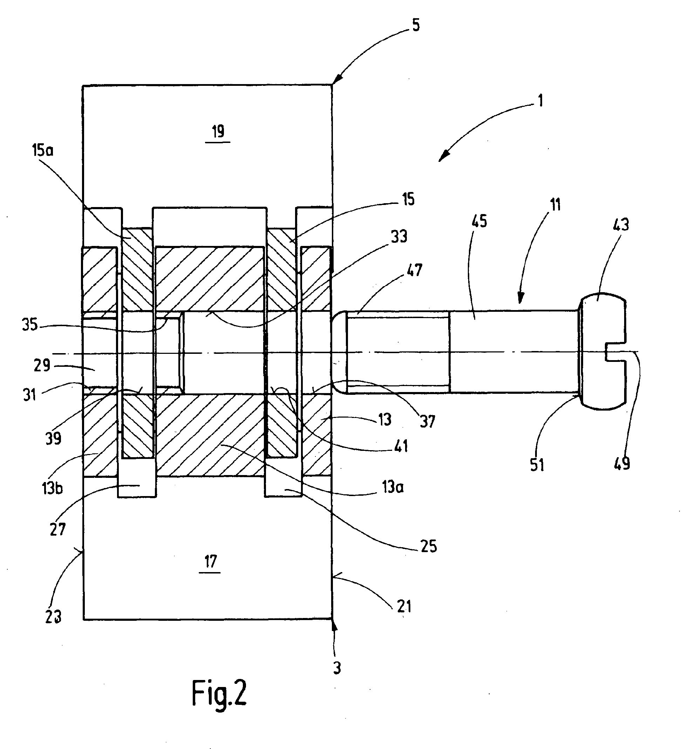

Figur 2 zeigt einen Schnitt durch das Scharnier 1 entlang der in Figur 1 wiedergegebenen Linie II-II mit der Schraube 11 in Explosionsdarstellung, das heißt, die Schraube 11 ist nicht in das Scharnier 1 eingeschraubt. Bei den nicht geschnittenen Bereichen des Scharnier 1 handelt es sich um die den Schweißwarzen 7 und 9, die aus Figur 1 ersichtlich sind, abgewandten Oberseiten 17 und 19 der Scharnierteile 3 und 5.

Aus der Darstellung gemäß Figur 2 ist ersichtlich, dass das erste Scharnierteil 3 drei Lappen aufweist, wobei der erste Lappen 13 mit der rechten Seitenfläche 21 des ersten Scharnierteils 3 fluchtet. In einem Abstand zu diesem liegt ein mittlerer Lappen 13a. Wiederum in einem Abstand ist ein Lappen 13b vorgesehen, der mit der linken Seitenfläche 23 fluchtet. Diese fluchtende Ausgestaltung erlaubt es, ein möglichst schmales Scharnier 1 zu realisieren. Diese Art der Anordnung ist also nicht zwingend erforderlich. Wesentlich ist es, dass das erste Scharnierteil 3 drei in einem Abstand zueinander angeordnete Lappen 13, 13a, 13b aufweist, zwischen denen Zwischenräume 25 und 27 vorhanden sind, weil die Lappen in einem Abstand zueinander angeordnet sind. In den Zwischenräumen 25 und 27 der drei Lappen des ersten Scharnierteils 3 sind zwei Lappen 15 und 15a des zweiten Scharnierteils 5 angeordnet.

Alle Lappen weisen Durchgangsöffnungen auf, die so angeordnet sind, dass sie in montiertem Zustand des Scharniers 1 miteinander fluchten und von der Schraube 11 durchgriffen werden.

Aus Figur 2 ist ersichtlich, dass im Bereich des Durchgangslochs 29 im Lappen 13b des ersten Scharnierteils 3 ein Innengewinde 31 vorgesehen ist. Dieses erstreckt sich bei dem hier dargestellten Ausführungsbeispiel über die gesamte Dicke des Lappens 13b. Dies ist insbesondere dann sinnvoll, wenn der Lappen 13b sehr dünn ist.

Auch in den Durchgangsloch 33 im mittleren Lappen 13a des ersten Scharnierteils ist ein Innengewinde 35 vorgesehen. Dieses erstreckt sich hier jedoch nur über einen Teil der Dicke des mittleren Lappens 13 und ist in einem Bereich angeordnet, der sich an den Zwischenraum 27 anschließt.

Es zeigt sich, dass die Erstreckung der Innengewinde in Richtung der Mittelachse der Durchgangslöcher variabel ist. Insbesondere im Bereich des in der Regel dickeren Lappens 13a kann ein längeres Innengewinde 31 vorgesehen werden, das höhere Kräfte aufnehmen kann.

Auch der erste Lappen 13 des ersten Scharnierteils 1 ist mit einem Durchgangsloch 37 versehen. Dessen Innendurchmesser ist aber so gewählt, dass er größer ist als der im Bereich des Innengewindes 35 oder 31.

Die Durchgangslöcher 39 im Lappen 15a und 41 im Lappen 15 des zweiten Scharnierteils 5 sind größer als im Bereich der Innengewinde 31 und 35.

Figur 2 zeigt die Schraube 11 in Seitenansicht. Sie umfasst einen Kopf 43 und einen Schaft 45, der zumindest in dem dem Kopf 43 abgewandten Bereich mit einem Außengewinde 47 versehen ist. Es ist so auf die Innengewinde 31 und 35 abgestimmt, dass es mit den Innengewinden 31 und 35 kämmt, aber mit den Durchgangslöchern 39 und 41 in den Lappen 15a und 15 des zweiten Scharnierteils nicht zusammenwirkt. An der Innenfläche dieser Durchgangslöcher 39, 41 kann das Außengewinde 47 zwar anliegen, so dass eine Stütze oder Führung gegeben ist. Es findet hier jedoch keine Krafteinwirkung derart statt, dass nennenswerte Kräfte aufgebaut werden, welche die zugehörigen Lappen in Richtung der Längsachse 49 der Schraube 11 verlagern könnten. Außerdem ist hier sichergestellt, dass auch die Innenfläche des Durchgangslochs 37 im Lappen 13 mit dem Außengewinde 47 nicht zusammenwirkt, allenfalls als Führung für die Schraube 11 wirkt.

Das erste Scharnierteil 3 weist also zwei benachbarte Lappen 13 und 13a auf, von denen nur einer mit einem Innengewinde versehen ist, nämlich der mittlere Lappen 13a. Es weist außerdem zwei benachbarte Lappen 13a und 13b auf, die beide mit einem innengewinde 35 beziehungsweise 31 versehen sind.

Wird die Schraube 11 in das Scharnier 1 eingesetzt, so durchgreift diese das Durchgangsloch 37 im Lappen 13, das Durchgangsloch 41 im Lappen 15, ohne dass deren Außengewinde 47 hier eingreifen würde. Wird die Schraube 11 weiter in das Scharnier 1 eingeführt, so greift diese in das Innengewinde 35 im Durchgangsloch 33 des mittleren Lappens 13a des ersten Scharnierteils 3. Um sie weiter Richtung ihrer Längsachse 49 in das Scharnier 1 einzuführen, muss sie gedreht werden, wobei deren Außengewinde 47 zunächst mit dem Innengewinde 35 zusammenwirkt. Tritt die Schraube 11 aus dem Innengewinde 35, in Figur 2 nach links, aus, so gelangt sie in den Bereich des Durchgangslochs 39 im Lappen 15a des zweiten Scharnierteils 5, ohne dass es hier zu einer für Gewinde üblichen Interaktion des Außengewindes 47 mit dem Lappen 15a käme. Der Lappen 15a wird also bei Verdrehung der Schraube 11 nicht mit in Richtung der Längsachse 49 wirkenden Kräften beaufschlagt. Wird die Schraube 11 weiter gedreht, so erreicht deren Außengewinde schließlich das Innengewinde 31 im Lappen 13b des ersten Scharnierteils 3. Beim weiteren Einschrauben der Schraube 11 in das Scharnier 1 berührt schließlich die dem Schaft 45 zugewandte Unterseite 51 des Kopfs 43 die rechte Seitenfläche 21 des Lappens 13. Eine weitere Verdrehung der Schraube 11 bewirkt, dass diese festgezogen wird und der Kopf 43 auf den Lappen 13 eine Kraft ausübt. Dadurch entstehen Reibungskräfte zwischen der Unterseite 51 der Schraube 43 und der rechten Seitenfläche 21 des Lappens 13. Dieser wird in Figur 2 nach links, also in Richtung auf den mittleren Lappen 13a des ersten Scharnierteils ausgelenkt beziehungsweise verbogen, sodass dieser gegen den Lappen 15 des zweiten Scharnierteils 5 angedrückt wird.

Da das Außengewinde 47 der Schraube 11 sowohl mit dem Innengewinde 35 im mittleren Lappen 13a als auch mit dem Innengewinde 31 des Lappens 13b zusammenwirkt, bleibt der Abstand zwischen diesen beiden Lappen 13a und 13b auch beim Festziehen der Schraube 11 gleich. Entscheidend ist also, dass in den beiden benachbarten Lappen 13a und 13b ein Innengewinde 35 beziehungsweise 31 vorgesehen ist, das mit dem Außengewinde 47 der Schraube 11 zusammenwirkt. Eine Relativbewegung der beiden Lappen 13a und 13b in Richtung der Längsachse 49 der Schraube 11 beim Festziehen der Schraube findet also nicht statt.

Durch die in Richtung der Längsachse 49 gemessene Breite des Zwischenraums 27 können die Reibungskräfte zwischen dem Lappen 15a des zweiten Scharnierteils 5 und den benachbarten Lappen 13a und 13b des ersten Scharnierteils 3 eingestellt werden. Vorzugsweise wird der Abstand zwischen den Lappen 13a und 13b so gewählt, dass sich eine Spielpassung mit dem dazwischenliegenden Lappen 15a ergibt. Diese bleibt eben auch nach Montage der Schraube 11 erhalten.

Beim Festziehen der Schraube 11 wird also lediglich der Lappen 13 des ersten Scharnierteils 1 gegenüber dem mittleren Lappen 13a verschwenkt beziehungsweise verbogen, sodass die Breite des Zwischenraums 25 reduziert und der dazwischenliegende Lappen 15 des zweiten Scharnierteils 5 mit Reibungskräften beaufschlagt wird.

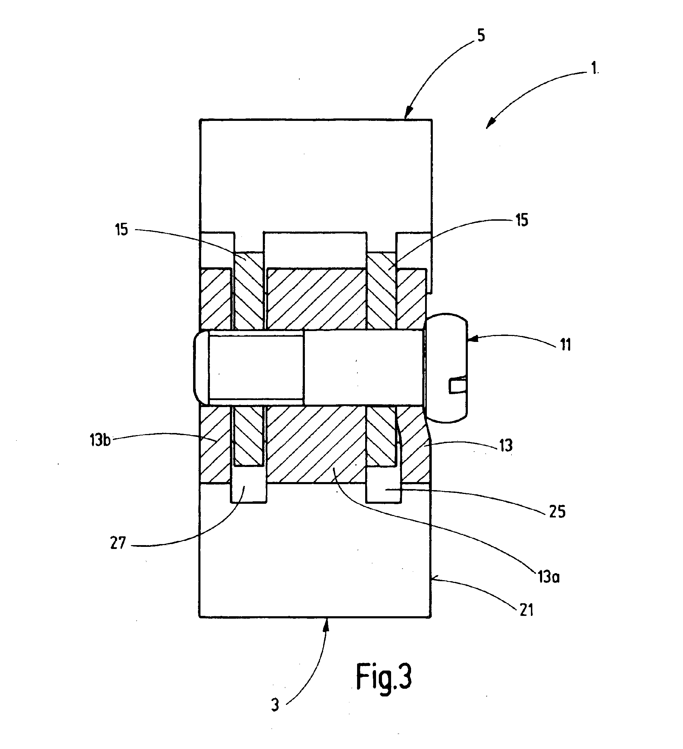

In Figur 3 ist das Scharnier 1 mit festgezogener Schraube 11 dargestellte. Gleiche Teile sind mit gleichen Bezugsziffern versehen, sodass insofern auf die Beschreibung zu den vorangegangen Figuren verwiesen wird, um Wiederholungen zu vermeiden.

Ein Vergleich der Figuren 2 und 3 zeigt, dass beim Festziehen der Schraube 11 der Lappen 13 des ersten Scharnierteils 3 aus seiner in Figur 2 dargestellten Ausgangslage nach links ausgelenkt wurde, sodass er nicht mehr über seine ganze Länge mit der rechten Seitenfläche 21 des ersten Scharnierteils 3 fluchtet und gegen den Lappen 15 des zweiten Scharnierteils 5 angepresst wird. Durch die Auslenkung des Lappens 13 des ersten Scharnierteils 1 nach links in Richtung auf den mittleren Lappen 13a reduziert sich die Breite des Zwischenraums 25, sodass der Lappen 15 des zweiten Scharnierteils 5 zwischen den Lappen 13 und 13a des ersten Scharnierteils eingeklemmt wird. Je nach dem, wie fest die Schraube 11 gezogen wird, lassen sich die dabei auftretenden Reibungskräfte einstellen, wobei eine minimale Reibung zwischen den beiden Scharnierteilen 3 und 5 realisierbar ist.

Bei Benutzung der Brille, also beim Verschwenken der Scharnierteile 3 und 5 gegeneinander wird ein unbeabsichtigtes Lösen der Schraube 11 dadurch verhindert, dass durch die elastische Verformung des Lappens 13 Rückstellkräfte entstehen, durch die Reibungskräfte zwischen den Lappen 13 und der Unterseite 51 des Kopfs 43 der Schraube 11 aufgebaut werden.

Ein Vergleich der Figuren 2 und 3 zeigt auch, dass der Abstand zwischen den Lappen 13a und 13b und damit die Breite des Zwischenraums 27 sich durch das Festziehen der Schraube nicht verändert haben. Es kann sich, wie aus Figur 3 ersichtlich, eine Verlagerung des zweiten Scharnierteils 5 gegenüber dem dritten Scharnierteile 3 nach links ergeben, sodass der frei gegenüber dem Außengewinde 47 der Schraube 11 bewegliche Lappen 15a in dem Zwischenraum 27 in Figur 3 etwas weiter nach links verlagert ist, als in Figur 2.

Entscheidend ist eben, dass ein einmal vorgegebenes Spiel zwischen den Lappen 13a und 13b durch das Festziehen der Schraube 11 nicht verändert wird. Eine Verdrehsicherung der Schraube 11 wird durch die Rückstellkräfte des Lappens 13 erreicht und durch den Anpressdruck der Unterseite 51 auf diesen Lappen beim Festziehen.

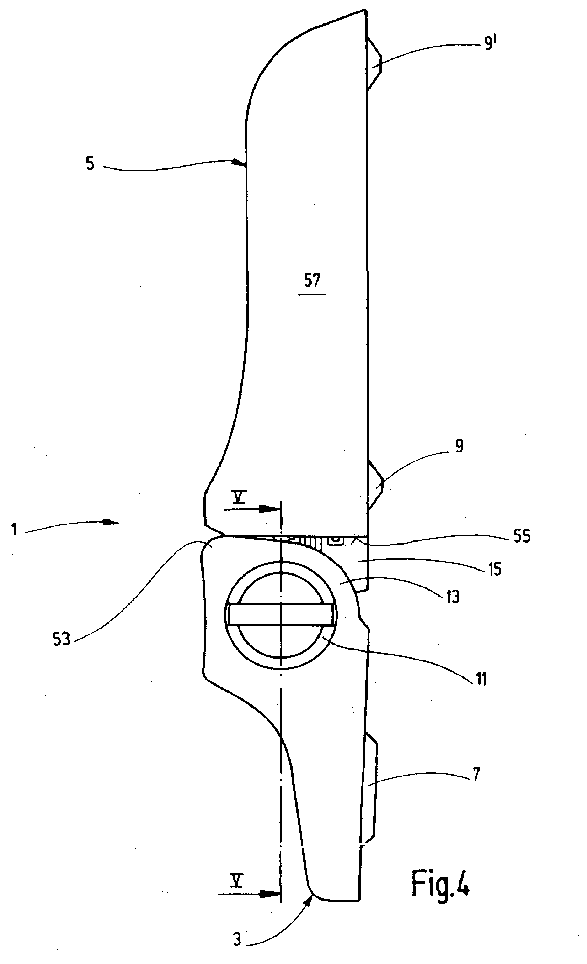

Figur 4 zeigt ein zweites Ausführungsbeispiel eines Scharniers in Seitenansicht. Gleiche und funktionsgleiche Teile sind mit gleichen Bezugsziffern versehen, sodass auf die Beschreibung zu den vorangegangenen Figuren verwiesen wird.

Auch das hier dargestellte Scharnier weist zwei Scharnierteile 3 und 5 auf, die mit Lappen versehen sind. Beispielhaft ist hier das erste Scharnierteil 3 mit drei und das zweite Scharnierteil 5 mit zwei Lappen versehen, die, wie bei dem Ausführungsbeispiel nach dem vorangegangen Figuren ineinander greifen und über eine Schraube 11 miteinander verbunden werden.

Das zweite Scharnierteil 5 ist hier größer, weil es als Federscharnier ausgebildet ist und eine Ausnehmung aufweist, die ein Scharnierelement und eine Feder umfasst, sodass Zugkräfte auf die Lappen des zweiten Scharnierteils 5 ausgeübt werden. Aufbau und Funktionsweise eines derartigen Federscharniers sind bekannt, sodass hier nicht näher darauf eingegangen wird.

Die beiden Scharnierteile 3 und 5 des Scharniers 1 werden am Mittelteil beziehungsweise an einem Bügel einer Brille befestigt. Hier sind beispielhaft eine Schweißwarze 7 am ersten Scharnierteil 3 und Schweißwarzen 9 beziehungsweise 9' am zweiten Scharnierteil 5 vorgesehen, mit denen das Scharnier 1 an einer Brille befestigt werden kann. Für die Funktionsweise des Scharniers 1 ist es belanglos, wie dieses an einer Brille befestigt wird.

Das in Figur 4 dargestellte Scharnier 1 ist als Federscharnier mit Schnappeffekt realisiert. Beide Scharnierteile 3 und 5 nehmen bevorzugte Positionen zueinander ein: Die in Figur 4 dargestellte Position der Scharnierteile 3 und 5 entspricht der Öffnungsposition eines Brillenbügels gegenüber einem Mittelteil einer Brille. Wird das zweite Scharnierteil 5 gegenüber dem ersten Scharnierteil 3 gegen den Uhrzeigersinn um etwa 90° gedreht, so gleitet eine Nase 53 am Lappen 13 des ersten Scharnierteils, wobei die Lappen 15 und 15' des zweiten Scharnierteils 5 aus einem Gehäuse 57 gegen die Kraft einer Feder im zweiten Scharnierteil 5 herausgezogen werden.

Durch die Nase 53 wird sichergestellt, dass sich zwei bevorzugte Relativpositionen zwischen den Scharnierteilen 3 und 5 ergeben. Die eine ist in Figur 4 dargestellt. Die andere ist die Position, in der das zweite Scharnierteil 5 gegenüber dem ersten Scharnierteil 3 gegen den Uhrzeigersinn um 90° verschwenkt ist. Schnappeffekt-Federscharniere der hier angesprochenen Art sind bekannt, sodass auf deren Funktionsweise hier nicht näher eingegangen wird.

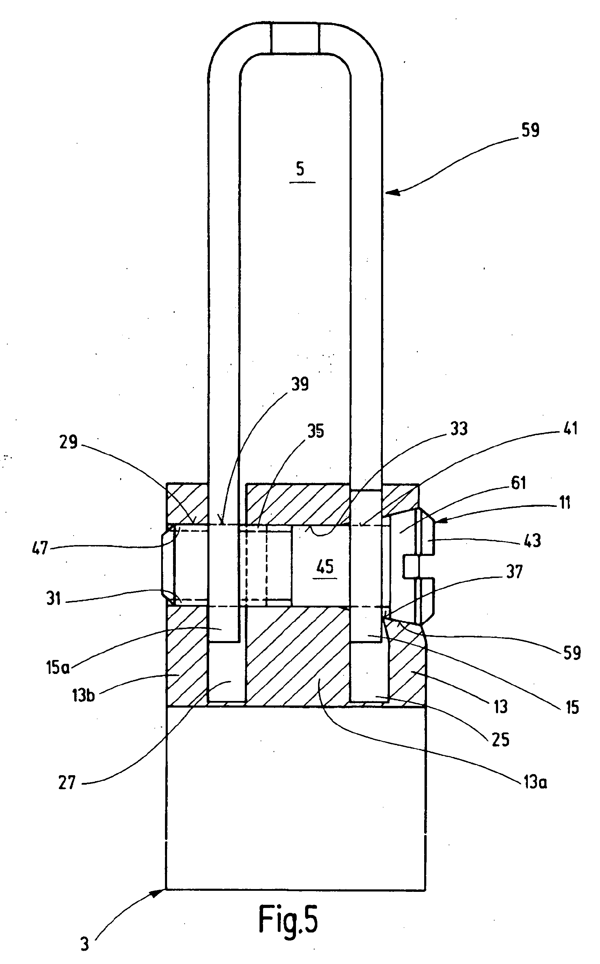

Figur 5 zeigt einen Schnitt entlang der in Figur 4 wiedergegebenen Linie V-V. Gleiche und funktionsgleiche Teile sind mit gleichen Bezugsziffern versehen, sodass auf die Beschreibung zu den vorangegangenen Figuren verwiesen wird.

In Figur 5 sind Teile des zweiten Scharnierteils 5 weggelassen, insbesondere das Gehäuse 57 und die bei einem Federscharnier übliche Feder. Sichtbar ist hier ein Scharnierelement 59 mit zwei Lappen 15 und 15a, die zwischen den drei Lappen 13, 13a und 13b des ersten Scharnierteils 3 angeordnet sind, nämlich in den Zwischenräumen 25 und 27, wie dies anhand der Figuren 2 und 3 erläutert wurde.

Bei der Darstellung gemäß Figur 5 ist die Schraube 11 festgezogen, sodass der Lappen 13 in Figur 5 nach links in Richtung auf den Lappen 13a verlagert wurde, sodass die Breite des Zwischenraums 25 so reduziert ist, dass der Lappen 15 hier mit einer vorgegebenen minimalen Reibkraft eingespannt ist.

Der Lappen 15a ist im Zwischenraum 27 nicht eingeklemmt, weil in den Durchgangslöchern 29 und 33 in den Lappen 13b und 13a jeweils ein Innengewinde 31 und 35 vorgesehen ist, wie dies anhand von Figur 2 und 3 erläutert wurde. Das Innengewinde 35 des Lappens 13a ist hier gestrichelt angedeutet. Es erstreckt sich hier beispielhaft nur über einen relativ kleinen Teil der Dicke des Lappens 13a, der auch hier vorzugsweise dicker ist als die übrigen Lappen 13,13b des ersten Scharnierteils 3. Ein einmal gegebener seitlicher Abstand der Lappen 13a und 13b bleibt auch beim Festziehen der Schraube 11 erhalten. Diese Funktion ist unabhängig davon, über welchen Bereich der Dicke der Lappen 13a und 13b sich das Innengewinde erstreckt. Das Außengewinde 47 der Schraube 11 wirkt mit den Durchgangslöchern 39 und 41 in den Lappen 15a und 15 nicht zusammen, auch nicht mit dem Durchgangsloch 37 im Lappen 13.

Um die Reibungskräfte zwischen dem Kopf 43 der Schraube 11 und dem Lappen 13 zu erhöhen, weist das Durchgangsloch 37 des Lappens 13 zumindest einen konischen Bereich auf. Hier ist das gesamte Durchgangsloch 37 als Innenkonus 59 ausgebildet. Entsprechend ist zumindest ein Bereich des Kopfs 43 der Schraube 11 als Außenkonus 61 ausgebildet, der mit dem Innenkonus 59 zusammenwirkt.

Während bei dem Ausführungsbeispiel gemäß den Figuren 1 bis 3 lediglich die Unterseite 51 des Kopfs 43 der Schraube 11 durch Berührung mit dem Lappen 13 Reibungskräfte als Verdrehsicherung aufbaute, sind es hier der Innenkonus 59 und der Außenkonus 61, die eine deutlich größere Fläche als die Unterseite 51 des anderen Ausführungsbeispiels haben. Dadurch ergeben sich höhere Reibungskräfte, die ein versehentliches Lösen der Schraube 11 verhindern. Derartige Kräfte könnten bei dem anderen Ausführungsbeispiel nur durch ein sehr hohes Festziehmoment erreicht werden, durch das aber auch die Reibungskräfte zwischen den beiden Scharnierteilen 3 und 5 wesentlich erhöht würden.

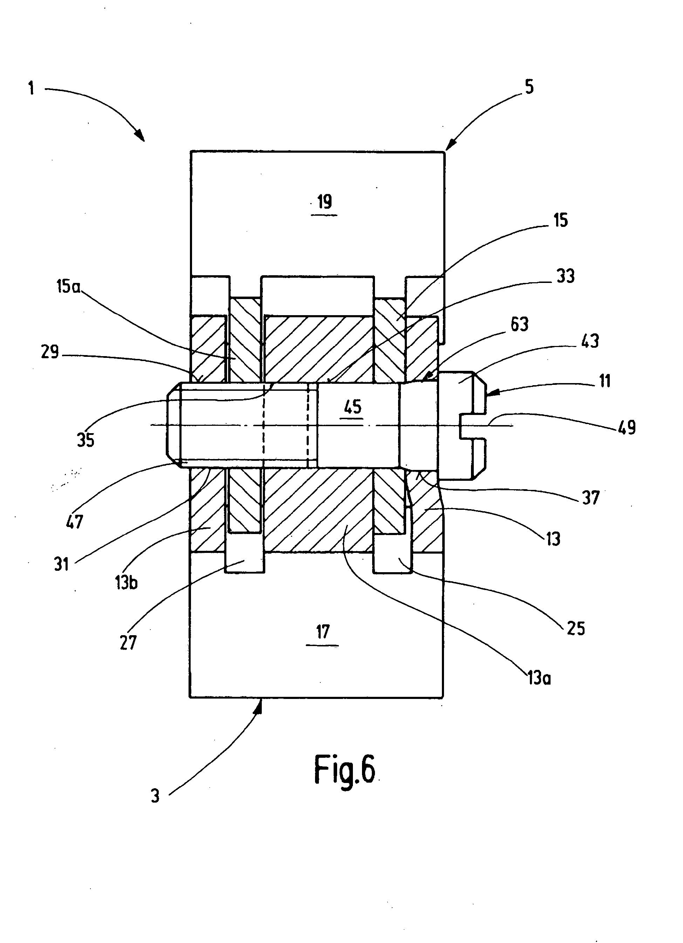

Figur 6 zeigt schließlich ein drittes Ausführungsbeispiel des Scharniers 1, das ähnlich aufgebaut ist wie das Ausführungsbeispiel gemäß den Figuren 1 bis 3. Gleiche und funktionsgleiche Teile sind mit gleichen Bezugszeichen versehen. Es handelt sich hier also um ein Scharnier 1 mit zwei Scharnierteilen 3 und 5, die drei beziehungsweise zwei ineinandergreifende Lappen aufweisen, die über eine Schraube 11 schwenkbeweglich miteinander verbunden sind. Innengewinde in zwei der drei Lappen des ersten Scharnierteils 3 wirken mit einem Außengewinde 47 der Schraube 11 zusammen, sodass ihr Abstand zueinander auch beim Festziehen der Schraube 11 nicht verändert wird. Die in Richtung der Längsachse 49 der Schraube 11 gemessene Länge des durch gestrichelte Linien angedeuteten Innengewindes 35 ist hier deutlich größer als die des bei dem Ausführungsbeispiel vorgesehenen Innengewindes. Sie kann also an verschiedene Belastungsfälle und für das erste Scharnierteil 3 gewählte Materialien angepasst werden.

Auch hier wird der Lappen 13 des ersten Scharnierteils 3 beim Festziehen der Schraube 11 in Richtung auf den Lappen 13a des ersten Scharnierteils verlagert, sodass sich die Breite des Zwischenraums 25 zwischen diesen beiden Lappen reduziert und eine definierte Reibungskraft mit dem Lappen 15 des zweiten Scharnierteils 5 aufgebaut wird. Eine Verdrehsicherung der Schraube 11 wird durch ein Kunststoffelement 63 geschaffen, das am Schaft 45 der Schraube in unmittelbarer Nachbarschaft des Kopfs 43 vorgesehen ist. Dessen Außendurchmesser ist so gewählt, dass es mit der Innenfläche im Bereich des Durchgangslochs 37 im Lappen 13 zusammenwirkt und Reibungskräfte aufbaut.

Die Außenfläche des Kunststoffelements 63 kann konisch aufgebaut sein, wie der Außenkonus 61 am Kopf 43 der Schraube 11 beim Ausführungsbeispiel gemäß Figur 5. Entsprechend kann dann auch im Bereich des Durchgangslochs 47 im Lappen 13 ein Innenkonus ausgebildet werden.

Die Eigenschaften des Kunststoffelements 63 werden so gewählt, dass sich relativ hohe Reibungskräfte zwischen dem Lappen 13 und der Schraube 11 ergeben und damit eine Verdrehsicherung realisiert wird.

Eine derartige Verdrehsicherung ist grundsätzlich bekannt, sodass hier nicht näher darauf eingegangen wird.

Es sei noch drauf hingewiesen, dass ein derartiges Kunststoffelement auch bei dem in den Figuren 4 und 5 dargestellten Ausführungsbeispiel des Scharniers 1 vorgesehen werden kann, um eine Verdrehsicherung der Schraube 11 zu realisieren und diese auch bei Gebrauch des Scharniers 1 gegen Lösen zu sichern.

## Patentansprüche

1. Scharnier (1) für Brillen mit
- einem ersten Scharnierteil (3), das einem Mittelteil einer Brille zugeordnet ist,
- einem zweiten Scharnierteil (5), das einem Bügel einer Brille zugeordnet ist, wobei
- eines der Scharnierteile (3) mindestens drei in einem Abstand zueinander angeordnete Lappen (13,13a,13b) und
- eines der Scharnierteile (5) mindestens zwei Lappen (15,15a) aufweist, die in einem Abstand derart zueinander angeordnet sind, dass sie in den Lücken zwischen den Lappen des anderen Scharnierteils anordenbar sind,
- die Lappen jeweils ein Durchgangsloch aufweisen, durch die
- in zusammengebautem Zustand des Scharniers (1) eine mit einem Außengewinde (47) und einem Kopf (43) versehene Schraube (11) greift, und wobei
- an dem Scharnierteil (3), das mindestens drei Lappen (13, 13a, 13b) aufweist, zwei benachbarte Lappen (13,13a) vorhanden sind, von denen nur einer ein Durchgangsloch (33) H mit einem Innengewinde (35) aufweist, und der andere mit einem Durchgangsloch (37) versehen ist, dessen Innendurchmesser so gewählt ist, dass es mit dem Außengewinde (47) der Schraube (11) nicht zusammenwirkt,
**dadurch gekennzeichnet, dass**
- die Durchgangslöcher (29,33) von wenigstens zwei Lappen (13b, 13a) der drei Lappen (13, 13a, 13b) des einen Scharnierteils (3) mit Innengewinden (31,35) versehen sind, die mit dem Außengewinde (47) der Schraube (11) zusammenwirken.

2. Scharnier nach Anspruch 1, **dadurch gekennzeichnet, dass** das Scharnier (1) als Federscharnier für Brillen ausgebildet ist.

3. Scharnier nach Anspruch 2, **dadurch gekennzeichnet, dass** das Scharnier (1) als Federscharnier mit Schnappeffekt für Brillen ausgebildet ist.

4. Scharnier nach einem der vorhergehenden Ansprüche, **dadurch gekennzeichnet, dass** der Abstand zwischen den beiden mit einem Innengewinde (31,35) versehenem Lappen (13b, 13a) des einen Scharnierteils (3) so gewählt ist, dass es größer ist als die Dicke eines Lappens (15a) des anderen Scharnierteils (5), der zwischen den Lappen (13a,13b) des Scharnierteils (3) anordenbar ist.

5. Scharnier nach einem der vorhergehenden Ansprüche, **dadurch gekennzeichnet, dass** der Abstand der beiden Lappen (13,13a) des einen Scharnierteils (3), von denen nur einer ein Innengewinde (35) aufweist, größer ist als die Dicke des Lappens (15) des anderen Scharnierteils (5), der zwischen den beiden Lappen anordenbar ist.

6. Scharnier nach einem der vorhergehenden Ansprüche, **dadurch gekennzeichnet, dass** der Lappen (13) ohne Innengewinde des mindestens drei Lappen aufweisenden einen Scharnierteils (3) beim Zusammenbau des Scharniers (1) durch die Schraube (11) elastisch verformt wird.

7. Scharnier nach einem der vorhergehenden Ansprüche, **dadurch gekennzeichnet, dass** der Abstand des Lappens (13) ohne Innengewinde des mindestens drei Lappen aufweisenden Scharnierteils (3) zu einem benachbarten Lappen (13a) mittels der die Scharnierteile verbindenden Schraube (11) veränderbar ist.

8. Scharnier nach einem der vorhergehenden Ansprüche, **dadurch gekennzeichnet, dass** das Durchgangsloch (37) in dem Lappen ohne Innengewinde des mindestens drei Lappen aufweisenden Scharnierteils zumindest bereichsweise konisch ausgebildet ist.

9. Scharnier nach einem der vorhergehenden Ansprüche, **dadurch gekennzeichnet, dass** der Kopf (43) der Schraube (11) zumindest bereichsweise konisch ausgebildet ist.

10. Scharnier nach einem der vorhergehenden Ansprüche, **dadurch gekennzeichnet, dass** die Schraube (11) ein zu ihrem Kopf (43) benachbartes Kunststoffelement (63) aufweist, das mit dem Durchgangsloch (37) zusammenwirkt.

11. Scharnier nach Anspruch 10, **dadurch gekennzeichnet, dass** das Kunststoffteil (63) zumindest bereichsweise konisch ausgebildet ist.

## Claims

1. A hinge (1) for eyeglasses having
- a first hinge part (3) associated with a central part of an eyeglass;
- a second hinge part (5) associated with an ear-piece of the eyeglass, wherein
- one of the hinge parts (3) comprises at least three tabs (13, 13a, 13b) situated at a distance from one another and
- one of the hinge parts (5) comprises at least two tabs (15, 15a) situated at a distance from one another such that they can be positioned within the interspaces between the tabs of the other hinge part,
- the tabs each have a through hole through which
- a screw (11) provided with an external thread (47) and a head (43) extends in the assembled state of the hinge (1), and wherein
- two adjacent tabs (13, 13a) are present on hinge part (3) which comprises at least three tabs (13, 13a, 13b), of which tabs only one has a through hole with internal thread (35), and the other tab being provided with a through hole (37) the inner diameter of which being selected such that it does not cooperate with the external thread (47) of the screw (11),
**characterized in that**
- the through holes (29, 33) of at least two tabs (13b, 13a) of the three tabs (13, 13a, 13b) of the one hinge part (3) are provided with internal threads (31, 35) which cooperate with external thread (47) of the screw (11).

2. Hinge according to claim 1, **characterized in that** the hinge (1) is designed as spring hinge for eyeglasses.

3. Hinge according to claim 2, **characterized in that** the hinge (1) is designed as a snap spring hinge for eyeglasses.

4. Hinge according to one of the preceding claims, **characterized in that** the distance between the two tabs (13b, 13a), both being provided with an internal thread (31, 35), of the one hinge part (3) is selected in such a way that this distance is greater than the thickness of a tab (15a) of the other hinge part (5) which can be disposed between the tabs (13a, 13b) of hinge part (3).

5. Hinge according to one of the preceding claims, **characterized in that** the distance between both tabs (13, 13a) of the one hinge part (3), of which tabs only one has an internal thread (35), is greater than the thickness of the tab (15) of the other hinge part (5) which can be disposed between both tabs.

6. Hinge according to one of the preceding claims, **characterized in that** the tab (13) without internal thread of the hinge part (3) having at least three tabs is elastically deformed by the screw (11) when the hinge (1) is assembled.

7. Hinge according to one of the preceding claims, **characterized in that** the distance of the tab (13) without internal thread of the hinge part (3) having at least three tabs to an adjacent tab (13a) may be changed by means of the screw (11) which connects the hinge parts.

8. Hinge according one of the preceding claims, **characterized in that** the through hole (37) in the tab without internal thread of the hinge part having at least three tabs has an at least partially conical design.

9. Hinge according to one of the preceding claims, **characterized in that** the head (43) of the screw (11) has an at least partially conical design.

10. Hinge according to one of the preceding claims, **characterized in that** the screw (11) has a plastic element (63) adjacent to the head (43) of the screw which cooperates with the through hole (37).

11. Hinge according to claim 10, **characterized in that** the plastic element (63) is at least partially conically designed.

## Revendications

1. Charnière (1) pour lunettes comprenant
- une première partie de charnière (3) qui est associée à une partie centrale d'une lunette,
- une seconde partie de charnière (5) qui est associée à une branche d'une lunette, dans laquelle
- une des parties de charnière (3) présente au moins trois pattes (13, 13a, 13b) disposées à une distance les unes des autres et
- une des parties de charnière (5) présente au moins deux pattes (15, 15a) qui sont disposées à une distance telle l'une de l'autre qu'elles peuvent être disposées dans les espaces entre les pattes de l'autre partie de charnière,
- les pattes présentent chacune un orifice de passage à travers lequel
- une vis (11) pourvue d'un filetage externe (47) et d'une tête (43) s'engrène à l'état monté de la charnière (1), et dans laquelle
- deux pattes voisines (13, 13a) sont présentes sur la partie de charnière (3) qui présente au moins trois pattes (13, 13a, 13b), parmi lesquelles seule une présente un orifice de passage (33) avec un filetage interne (35), et l'autre est pourvue d'un orifice de passage (37) dont le diamètre interne est choisi de sorte qu'il ne coopère pas avec le filetage externe (47) de la vis (11),
**caractérisée en ce que**
- les orifices de passage (29, 33) d'au moins deux pattes (13b, 13a) des trois pattes (13, 13a, 13b) d'une des parties de charnière (3) sont pourvus de filetages internes (31, 35) qui coopèrent avec le filetage externe (47) de la vis (11).

2. Charnière selon la revendication 1, **caractérisée en ce que** la charnière (1) est réalisée en tant que charnière à ressort pour lunettes.

3. Charnière selon la revendication 2, **caractérisée en ce que** la charnière (1) est réalisée en tant que charnière à ressort avec effet à déclic pour lunettes.

4. Charnière selon une des revendications précédentes, **caractérisée en ce que** la distance entre les deux pattes (13b, 13a) pourvues d'un filetage interne (31, 35) d'une des parties de charnière (3) est choisie de sorte qu'elle est supérieure à l'épaisseur d'une patte (15a) de l'autre partie de charnière (5) qui peut être disposée entre les pattes (13a, 13b) de la partie de charnière (3).

5. Charnière selon une des revendications précédentes, **caractérisée en ce que** la distance des deux pattes (13, 13a) d'une des parties de charnière (3), parmi lesquelles seule une présente un filetage interne (35), est supérieure à l'épaisseur de la patte (15) de l'autre partie de charnière (5) qui peut être disposée entre les deux pattes.

6. Charnière selon une des revendications précédentes, **caractérisée en ce que** la patte (13) sans filetage interne d'une des parties de charnière (3) présentant au moins trois pattes est déformée élastiquement par la vis (11) lors du montage de la charnière (1).

7. Charnière selon une des revendications précédentes, **caractérisée en ce que** la distance de la patte (13) sans filetage interne de la partie de charnière (3) présentant au moins trois pattes à une patte voisine (13a) peut être modifiée au moyen de la vis (11) reliant les parties de charnière.

8. Charnière selon une des revendications précédentes, **caractérisée en ce que** l'orifice de passage (37) dans la patte sans filetage interne de la partie de charnière présentant au moins trois pattes est réalisé de manière conique au moins par région.

9. Charnière selon une des revendications précédentes, **caractérisée en ce que** la tête (43) de la vis (11) est réalisée de manière conique au moins par région.

10. Charnière selon une des revendications précédentes, **caractérisée en ce que** la vis (11) présente un élément plastique (63) voisin de sa tête (43) qui coopère avec l'orifice de passage (37).

11. Charnière selon la revendication 10, **caractérisée en ce que** la partie plastique (63) est réalisée de manière conique au moins par région.
